# EUROPÄISCHE PATENTSCHRIFT

(11) **EP 2 802 487 B1**
(45) Veröffentlichungstag und Bekanntmachung des Hinweises auf die Patenterteilung: **08.11.2017**
(21) Anmeldenummer: 13700086.5
(22) Anmeldetag: 09.01.2013
(51) Int. Cl.: B60R 19/34

(54) **ENERGIE ABSORBIERENDE TRAGSTRUKTUR SOWIE VERFAHREN ZUR HERSTELLUNG VON DIESER**
ENERGY-ABSORBING SUPPORT STRUCTURE AND METHOD FOR PRODUCING SAME
STRUCTURE PORTEUSE ABSORBANT L'ÉNERGIE ET PROCÉDÉ DE FABRICATION DE LADITE STRUCTURE

(30) Priorität: 12.01.2012 DE 102012200410
(43) Veröffentlichungstag der Anmeldung: 19.11.2014
(73) Patentinhaber: Thermoplast Composite GmbH, 91474 Langenfeld (DE)
(72) Erfinder: BÖRGER, Herbert, 91474 Langenfeld (DE)
(74) Vertreter: Levpat
(86) Internationale Anmeldenummer: PCT/EP2013/050241
(87) Internationale Veröffentlichungsnummer: WO 2013/104635

(56) Entgegenhaltungen:
- EP-A1- 1 366 960
- FR-A1- 2 657 130
- US-B1- 7 484 781

## Beschreibung

Die Erfindung betrifft eine Energie absorbierende Tragstruktur nach dem Oberbegriff des Anspruchs 1. Ferner betrifft die Erfindung ein Verfahren zur Herstellung einer Energie absorbierenden Tragstruktur.

Energie absorbierende Tragstrukturen sind, insbesondere für den Stoßfänger- oder Stoßstangenbereich eines Kraftfahrzeuges, bekannt aus der EP 1 464 547 A1, der DE 38 39 059 A1, der DE 603 00 496 T2, der EP 1 607 272 B1, der EP 1744 077 A1, der EP 2 335 983 A2, der WO 2011/058152 A1, der DE-PS 1 933 149 und der DE 10 2006 058 604 A1. Die EP 1 366 960 A1 zeigt eine rohrförmige, energieabsorbierende Tragstruktur gemäß dem Oberbegriff des Anspruchs 1. Die US 7,484,781 B1 zeigt einen Stoßfänger, der einen konstanten Verzögerungseffekt haben soll. Die FR 2 657 130 A1 zeigt ein weiteres Beispiel für einen Absorberkörper.

Es ist eine Aufgabe der vorliegenden Erfindung eine Energie absorbierende Tragstruktur auf Basis eines Absorberkörpers aus faserverstärkten Kunststoffmaterial derart weiterzubilden, dass deren Energieaufnahme bei einer stoßinduzierten Energieeinleitung in die Tragstruktur vorhersagbar und definiert erfolgt. Eine weitere Aufgabe der Erfindung ist es, ein Herstellungsverfahren für eine solche Tragstruktur anzugeben.

Diese Aufgabe ist erfindungsgemäß gelöst durch eine Tragstruktur mit den in Anspruch 1 angegebenen Merkmalen.

Erfindungsgemäß wurde erkannt, dass eine Vordeformation des Absorberkörpers zu sehr definierten Krafteinleitungs- und damit Energieabsorptionsverhältnissen im Falle des Einleitens eines Stoßes in die Tragstruktur führt. Hierdurch kann das Energieabsorptions-Potenzial des faserverstärkten Kunststoffmateriales vorhersagbar und definiert genutzt werden. Eine hohe spezifische Energieabsorption des faserverstärkten Kunststoffmaterials im Bereich von beispielsweise 50 kJ/kg bis 120 kJ/kg kann ausgenutzt werden, die deutlich höher ist als bei vergleichbaren metallischen Absorberkörpern. Eine unerwünschte, undefinierte Kraft-Weg-Abhängigkeit im Anfangsbereich der Deformation des Absorberkörpers aus dessen Ursprungszustand wird dann für den Stoßfall vermieden. Ein sehr großer Längenanteil des Absorberkörpers kann zur Deformation aus dem Ausgangszustand in den Deformationszustand genutzt werden, beispielsweise 85 % der gesamten Länge des Absorberkörpers zwischen den Tragstruktur-Komponenten. Die Tragstruktur-Stoßaufnahmekomponente der Energie absorbierenden Tragstruktur kann als Stoßfänger oder Stoßstange an einem Kraftfahrzeug ausgeführt sein. Der Absorberkörper kann rohrförmig ausgeführt sein. Ein rohrförmiger Absorberkörper kann mit rundem oder mit ovalem bzw. elliptischem Querschnitt ausgeführt sein. Der Absorberkörper kann mit quadratischem, mit rechteckigem oder auch mit mehreckigem, zum Beispiel dreieckigem oder mehr als viereckigem Querschnitt ausgeführt sein. Der Absorberkörper kann kraftschlüssig in die Tragstruktur integriert sein und kann alle dynamischen und statischen Lasten, insbesondere auch Zug- und Querkräfte, uneingeschränkt mittragen. Im Falle des Einsatzes der Tragstruktur in einem Kraftfahrzeug kann der Absorberkörper beispielsweise auch zur Aufnahme von Abschleppkräften dienen. Die Tragstruktur kann im Kraftfahrzeugbau zum Einsatz kommen. Alternativ kann die Tragstruktur auch als Strukturkomponente von Luftfahrzeugen, beispielsweise von Flugzeugen oder Hubschraubern, von Fahrstühlen oder auch von Gebäuden genutzt werden. Im letzteren Falle kann die Tragstruktur Teil eines Erdbebenschutz-Systems sein. Der Absorberkörper kann ausschließlich aus dem faserverstärkten Kunststoffmaterial bestehen. Der Absorberkörper deformiert sich definiert. Über die jeweiligen Delaminationsbedingungen, beispielsweise über die Wandstärke des Absorberkörpers und/oder über die Gestaltung eines zum Beispiel als Schneide fungierenden Delaminierungskörpers, lässt sich die Energieabsorption fein beeinflussen. Die Funktion eines Delaminierungskörpers kann auch von einer der Tragstruktur-Komponenten, zwischen denen der Absorberkörper angeordnet ist, übernommen werden. Eine Gestaltung des Delaminierungskörpers als Schneide ist nicht zwingend. Der Delaminierungskörper muss lediglich so gestaltet sein, dass er sich zur Fortsetzung der Delaminierung am vordefomierten Absorberkörper abstützt.

Zur Erzielung von für die Energieabsorption brauchbaren Delaminationseigenschaften muss eine Wandstärke des Absorberkörpers eine gewisse Untergrenze überschreiten. Diese Untergrenze wird so gewählt, dass eine Delaminationskraft für den Absorberkörper geringer ist, als eine potenzielle Beugekraft, dass also sichergestellt ist, dass der Absorberkörper bei einer Stoßbelastung sich über eine Delamination und nicht über ein Ausbeulen verformt. Eine Untergrenze für die Wandstärke kann bei einem rohrförmigen Absorberkörper mit einem Durchmesser von etwa 20 mm bis 25 mm etwa bei 1,0 mm liegen. Bei einem Rohrdurchmesser des Absorberköpers von 70 mm kann die Untergrenze für die Wandstärke bei 1,4 mm liegen. Dies gilt für Rohrlängen im Bereich von 100 mm. Die Triggerstruktur sorgt für definierte Vordeformations-Verhältnisse.

Eine Tragstruktur nach Anspruch 2 ermöglicht eine Aufnahme von Kräften in verschiedenen Richtungen durch die Energie absorbierende Tragstruktur. Bei den aufzunehmenden Kräften kann es sich um reine Haltekräfte und/oder um stoßinduzierte Kräfte handeln. Mindestens einer der Absorberkörper ist vordeformiert. Neben dem vordeformierten Absorberkörper können die weiteren Körper aus faserverstärktem Kunststoffmaterial rein als Haltestrukturen und/oder ebenfalls als Energieabsorber zum Einsatz kommen. Die Körper aus faserverstärktem Kunststoffmaterial können nach Art eines Dreibeins gestaltet sein. Auch eine größere Anzahl derartiger Körper aus faserverstärktem Kunststoffmaterial innerhalb der Energie absorbierenden Tragstruktur ist möglich.

Eine Spritzguss-Verbindung nach Anspruch 3 ermöglicht es, einen vordeformierten Abschnitt des Absorberkörpers mit den Tragstruktur-Komponenten spielfrei so zu verbinden, dass die stoßinduzierte Deformation des Absorberkörpers vom Ausgangszustand in den Deformationszustand sofort, also ohne Totwege zwischen den Tragstruktur-Komponenten, einsetzt. Es liegen dann vollkommen definierte Energieabsorptions-Verhältnisse vor. Zudem ergeben sich durch das Spritzgussverbinden definierte Verbindungsverhältnisse zwischen dem Absorberkörper und der Tragstruktur auch im Bereich eines vordeformierten Abschnitts des Absorberkörpers. Die Spritzguss-Verbindung kann durch Umspritzen hergestellt sein.

Die Vorteile eines Herstellungsverfahrens nach Anspruch 4 entsprechen denen, die vorstehend im Zusammenhang mit dem erfindungsgemäßen Absorberkörper bereits erläutert wurden.

Die Spritzguss-Verbindung nach Anspruch 5 kann insbesondere durch ein Umspritzen des Absorberkörpers erfolgen.

Ein Vordeformieren des Absorberkörpers nach Anspruch 6 lässt sich elegant in den Herstellungsprozess der Tragstruktur integrieren.

Eine Kraftmessung nach Anspruch 7 ermöglicht eine sichere Qualitätskontrolle bei der Herstellung des Absorberkörpers und der Tragstruktur.

Ausführungsbeispiele der Erfindung werden nachfolgend anhand der Zeichnungen näher erläutert. In dieser zeigen:
- Fig. 1: eine Energie absorbierende Tragstruktur mit einem vordeformierten Absorberkörper aus einem faserverstärkten Kunststoffmaterial, angeordnet zwischen einer Tragstruktur-Widerlagerkomponente und einer Tragstruktur-Stoßaufnahmekomponente;
- Fig. 2: einen Absorberkörper als Vorprodukt bei der Herstellung der Tragstrukturen nach Figur 1, dargestellt in einem noch nicht vordeformierten Urzustand;
- Fig. 3: den Absorberkörper nach Figur 2 nach der Vordeformation;
- Fig. 4: den Absorberkörper nach Figur 2, angeordnet zwischen zwei Werkzeugkomponenten eines Spritzwerkzeuges vor dem Schließen des Werkzeugs, dargestellt in einem axialen Längsschnitt;
- Fig. 5: einen Schnitt gemäß Linie V-V in Figur 4;
- Fig. 6: einen axialen Längsschnitt durch einen stirnseitigen Abschnitt des anfänglich vordeformierten Absorberkörpers nach dem Beginn des Schließens des Spritzguss-Werkzeugs;
- Fig. 7: in einer zur Figur 6 ähnlichen Darstellung den stirnseitigen Abschnitt des vollendet vordeformierten Absorberkörpers nach Abschluss des Schließens des Spritzguss-Werkzeugs;
- Fig. 8: in einer zur Figur 7 ähnlichen Darstellung einen vollendet vordeformierten, alternativen Absorberkörper, der sich an einer Variante eines Deformationsabschnitts einer Tragstruktur-Widerlagerkomponente abstützt;
- Fig. 9: ein Kraft/Weg-Diagramm, welches die Abhängigkeit der Deformationskraft, ausgeübt auf den Absorberkörper, von einer Relativverlagerung eines Deformationskörpers relativ zum Absorberkörper zeigt.

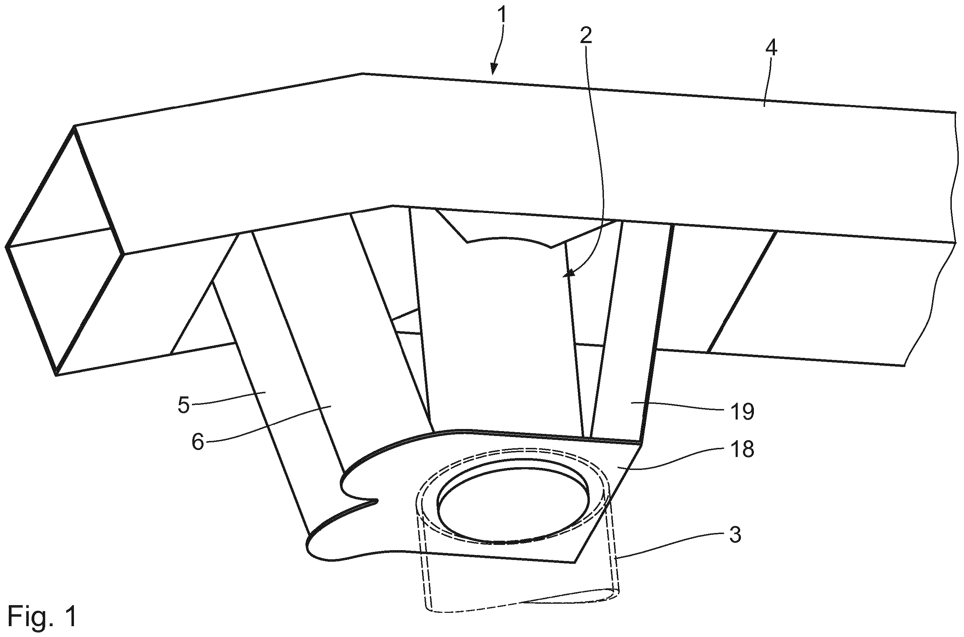

Figur 1 zeigt einen Ausschnitt einer Energie absorbierenden Tragstruktur 1, die Bestandteil eines Kraftfahrzeugs sein kann. Die Tragstruktur 1 hat einen Absorberkörper 2 aus einem faserverstärkten Kunststoffmaterial, der angeordnet ist zwischen einer Tragstruktur-Widerlagerkomponente 3, bei der es sich beispielsweise um einen Fahrzeuglängsträger oder um einen Fahrzeug-Längsträgerflansch handeln kann, und einer Tragstruktur-Stoßaufnahmekomponente 4, bei der es sich um einen Stoßfänger-Querträger oder um einen Stoßstange des Kraftfahrzeugs handeln kann.

Der Absorberkörper 2 ist insgesamt rohrförmig ausgebildet. Eine rohrförmige Hauptkomponente der Tragstruktur-Widerlagerkomponente 3 ist in der Figur 1 gestrichelt und gebrochen dargestellt. Die Tragstruktur-Widerlagerkomponente 3 ist rohrförmig ausgeführt und kann, wie in der Figur 1 dargestellt, einen runden oder auch ovalen Querschnitt haben. Auch ein in anderer Weise an eine Strukturumgebung der Tragstruktur 1 angepasster Querschnitt der Tragstruktur-Widerlagerkomponente 3 ist möglich.

Neben dem Absorberkörper 2 hat die Tragstruktur 1 noch zwei Stützkörper 5, 6, die ebenfalls aus einem faserverstärkten Kunststoffmaterial gefertigt und ebenfalls rohrförmig ausgeführt sind. Die Stützkörper 5, 6 haben einen kleineren Rohrdurchmesser als der Absorberkörper 2. Die Stützkörper 5, 6 sind zusammen mit dem Absorberkörper 2 nach Art eines Dreibeins angeordnet. Längsachsen des Absorberkörpers 2 einerseits und der Stützkörper 5, 6 andererseits weisen in verschiedene Richtungen. Auch die Längsachsen der Stützkörper 5 und 6 können in verschiedene Richtungen weisen.

Die Stützkörper 5, 6 können ebenfalls als Stoßenergie absorbierende Absorberkörper ausgeführt sein.

Auch die Stützkörper 5, 6 stützen die Tragstruktur-Stoßaufnahmekomponente 4 gegen die Tragstruktur-Widerlagerkomponente 3 ab.

Das faserverstärkte Kunststoffmaterial des Absorberkörpers 2 und der Stützkörper 5, 6 ist ein Faserverbundwerkstoff mit einem Fasermaterial, mit einer Kunststoffmatrix, in die das Fasermaterial eingebettet ist, und mit einem Haftvermittler, mit dem die Filamente des Fasermaterials beschichtet sind. Die Kunststoffmatrix wird auch als Imprägnier-Polymer bezeichnet. Der Haftvermittler wird auch als Schlichte bezeichnet.

Als Fasermaterial kann Glasfaser, Kohlefaser, Aramid, Basalt, Polyester oder Naturfaser zum Einsatz kommen. Die Fasern können als EndlosFasern ausgebildet sein. Zumindest ein Teil der Fasern verläuft längs des Absorberkörpers 2, also in Verbindungsrichtung zwischen den beiden Tragstruktur-Komponenten 3,4. Bei einem rohrförmigen Absorberkörper 2 verläuft jedenfalls ein Großteil der Fasern in axialer Richtung. Die Fasern können zu Faserbündeln, also zu Rovings, zusammengefasst sein.

Als Imprägnier-Polymer bzw. Kunststoffmatrix kann ein Thermoplast zum Einsatz kommen. Beispiele hierfür sind PE (Polyethylen), PP (Polypropylen), andere Polyolefine sowie Blends dieser Polyolefine, SAN (Styrol/Acrylnitril), PA (Polyamid), zum Beispiel PA 6, PA 6.6, PA 6.6T, PA 12, PA 6.10, ASA (Acrylnitril/Styrol/Acrylester), PC (Polycarbonat), PBT (Polybutylenterephthalat), PET (Polyethylentrephthalat), PPS (Polyphenylensulfid), PSU (Polysulfon), PES (Polyethersulfon), PEEK (Polyetheretherketon) oder Polymerblends, zum Beispiel PC/PBT. Als Imprägnier-Polymer kann auch ein Duroplast zum Einsatz kommen, welches als Schmelze im B-Stadium (Resitol) aufgetragen werden kann. Für die Kunststoffmatrix kann auch das Polymer Polyoxymethylen (POM) oder eine Mischung aus Polyoxymethylen (POM) und thermoplastischem Polyurethan (PUR) ausgewählt sein. Diese Varianten für die Kunststoffmatrix führen zu einer steifen und zähen Matrix, was zu einer entsprechend hohen Energieaufnahmemöglichkeit des Faserverbundwerkstoffs führt.

Der Absorberkörper 2 ist so ausgeführt, dass er aufgrund einer stoßerzeugten Relativverlagerung der Tragstruktur-Komponenten 3, 4 zueinander durch Verformung aus einem Ausgangszustand, der in der Figur 1 dargestellt ist, in einen verformten Deformationszustand Energie absorbiert, die durch einen Stoß in die Tragstruktur 1 eingeleitet wird. Bei einem Stoß auf die Tragstruktur-Stoßaufnahmekomponente 4, dessen Stoßenergie größer ist als ein vorgegebener Mindestwert, wird also der Absorberkörper 2 in den Deformationszustand verformt. Auch die Stützkörper 5, 6 können dabei verformt werden. Diese Deformation erfolgt durch Delamination. Bei der Deformation wird eine äußere Rohr-Schicht vom verbleibenden Absorberkörper 2 abgeschält. Hierbei löst sich eine äußere Schicht des Absorberkörpers 2 von einer inneren Schicht des Absorberkörpers 2. Dieses Abschälen bzw. Delaminieren kann aufgrund des Abstützens des Absorberkörpers 2 zwischen den beiden Tragstruktur-Komponenten 3, 4 geschehen. Der Einsatz eines als Schneide fungierenden Delaminierungskörpers ist nicht erforderlich, grundsätzlich aber möglich.

Der Absorberkörper 2 ist als bereits im Ausgangszustand gegenüber einem Ursprungszustand des Absorberkörpers 2 durch Energieabsorption vordeformierter Körper ausgeführt. Sowohl die Verformung zwischen dem Ursprungszustand und dem Ausgangszustand bei der Vordeformation als auch eine stoßbedingte Verformung zwischen dem Ausgangszustand und dem Deformationszustand erfolgt durch Delamination.

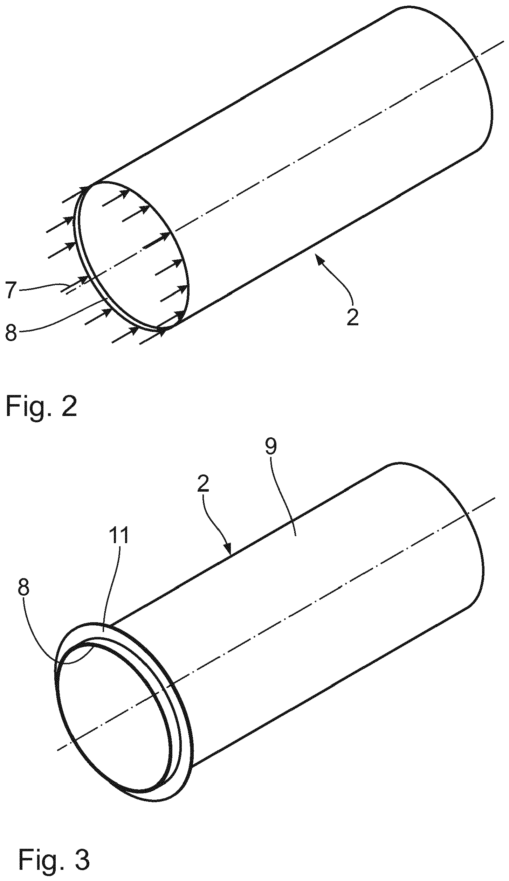

Die Figuren 2 und 3 zeigen den Vorgang der Vordeformation. In der Figur 2 liegt der Absorberkörper 2 in seinem Ursprungszustand vor. Ausgehend hiervon wird axial auf den Absorberkörper 2 eine Vordeformationskraft (Kraftpfeile 7) ausgeübt. Der Absorberkörper 2 hat stirnseitig eine Triggerstruktur 8, die vorgibt, wo der Absorberkörper 2 bei Ausübung der Vordeformationskraft 7 vordeformiert wird, die also den Ort eines Beginns der Vordeformation vorgibt. Die Triggerstruktur 8 ist als Anfasung einer Stirnseite des Absorberkörpers 2 gebildet, wobei ein 45°-Fasenwinkel vorliegt. Die Anfasung der Triggerstruktur 8 ist so, dass im Bereich der Triggerstruktur 8 eine äußere Rohrwand 9 des Absorberkörpers 2 stirnseitig über eine innere Rohrwand 10 des Absorberkörpers 2 übersteht.

Figur 3 zeigt den Absorberkörper 2 im vordeformierten Ausgangszustand. Bedingt durch die Vordeformationskraft, die zu einer Delamination des Absorberkörpers 2 führt, ist benachbart zur Triggerstruktur 8 eine äußere Rohrschicht vom Absorberkörper 2 abgeschält, so dass sich ein Deformationsflansch 11 gebildet hat. Die Vordeformation hat an der Stirnseite des Absorberkörpers 2 stattgefunden, die die Triggerstruktur 8 aufweist. Diese Variante der Vordeformation wird auch als flanschförmige (Vor-)Delamination bezeichnet.

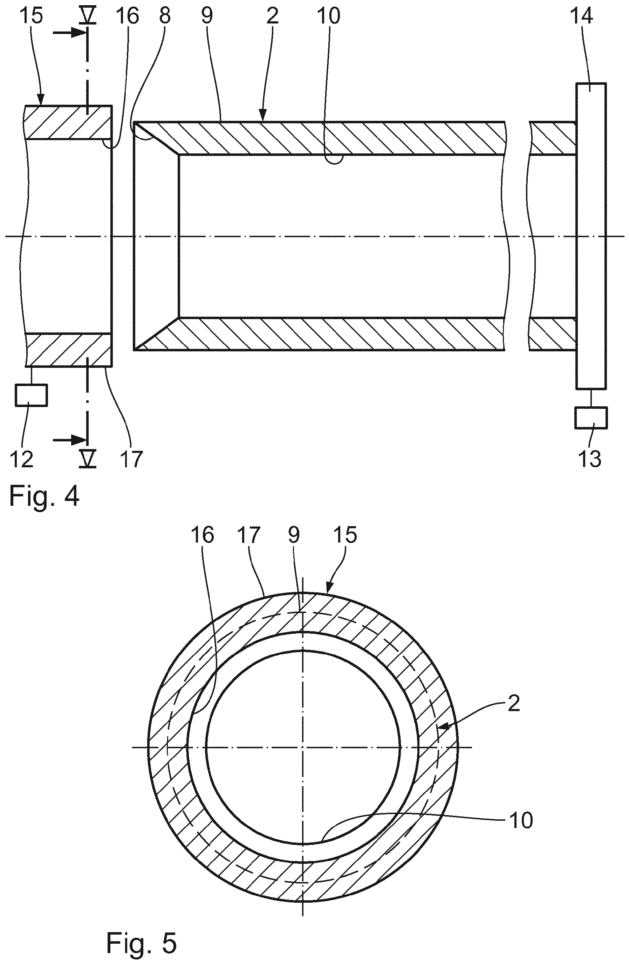

Die Vordeformation bzw. Vordelamination des Absorberkörpers 2 als Verfahrensschritt bei Herstellung der Tragstruktur 1 kann in einem Spritzguss-Werkzeug mit Werkzeugkomponenten bzw. Werkzeughälften 12, 13 geschehen, wie nachfolgend anhand der Figur 4 erläutert wird. Dort ist der Absorberkörper 2 in einem unterbrochenen Längsschnitt dargestellt. Der Absorberkörper 2 stützt sich mit seiner nicht angefasten, in der Figur 4 rechten Stirnseite, an einem Widerlagerkörper 14 der Werkzeughälfte 13 ab. Zur Vordeformierung dient ein rohrförmiger Deformations- bzw. Delaminierungskörper 15 der Werkzeughälfte 12. Bei der Vordeformation wird der Deformationskörper 15 koaxial auf die die Triggerstruktur 8 aufweisende Stirnseite des Absorberkörpers 2 aufgesetzt.

Figur 5 verdeutlicht die Durchmesserverhältnisse zwischen dem Absorberkörper 2 einerseits und dem Deformationskörper 15 andererseits. In der Figur 5, die die Rohr-Querschnittsverhältnisse zeigt, ist der Deformationskörper 15 mit durchgezogenen Linien und der Absorberkörper 2 gestrichelt dargestellt.

Ein Durchmesser der inneren Rohrwand 10 des Absorberkörpers 2 ist kleiner als ein Durchmesser einer inneren Rohrwand 16 des Deformationskörpers 15. Der Drchmesser der inneren Rohrwand 16 des Deformationskörpers 15 ist kleiner als ein Durchmesser der äußeren Rohrwand 9 des Absorberkörpers 2. Der Durchmesser der äußeren Rohrwand 9 des Absorberkörpers 2 ist kleiner als ein Durchmesser einer äußeren Rohrwand 17 des Deformationskörpers 15.

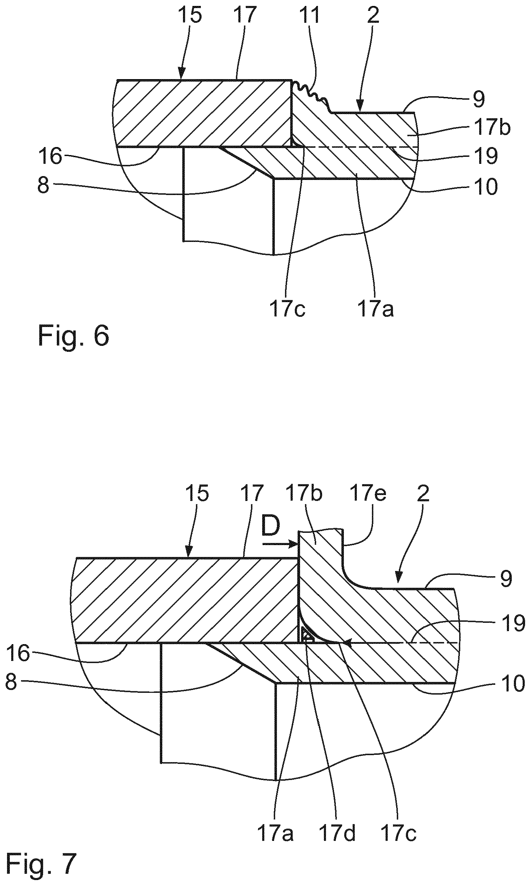

Beim Schließen des Spritzgusswerkzeuges mit den Werkzeughälften 12, 13 verringert sich der Abstand zwischen dem Deformationskörpers 15 und dem Wiederlagerkörper 14 so, dass dieser geringer wird als eine AxialErstreckung des Absorberkörpers 2. Der Deformationskörper 15 arbeitet sich dann in den Absorberkörper 2 ein. Die Triggerstruktur 8 bedingt, dass der Absorberkörper 2 im Bereich der Triggerstruktur 8 vordeformiert wird. Dies ist in den Figuren 6 und 7 ausschnittsweise verdeutlicht. Dort ist der Deformationskörper 15 gestrichelt dargestellt. Figur 6 zeigt einen anfänglich vordeformierten Zustand des Absorberkörpers 2. Im Bereich einer stirnseitigen, führenden Fläche des Deformationskörpers 15 bildet sich bei der Vordeformation der Deformationsflansch 11. Zwischen einer inneren Schicht 17a und einer äußeren Schicht 17b des Absorberkörpers 2 hat sich eine beginnende Rissfront 17c gebildet, an der die äußere Schicht 17b unter Bildung des Deformationsflansches 11 von der inneren Schicht 17a beim Delamanieren abreißt bzw. sich abschält. Eine radiale Position der Rissfront 17c bleibt nach Beginn der Ausgestaltung der Rissfront 17c erhalten. Im Bereich der inneren Schicht 17a bleibt der Absorberkörper 2 ungeschädigt und kann beispielsweise weiterhin Querkräfte aufnehmen.

Figur 7 zeigt die Situation bei vollendeter Vordeformation. Der Deformationskörper 15 ist nun soweit längs der Deformationsrichtung D relativ zum Absorberkörper 2 vorgedrungen, dass sich die Rissfront 17c vollständig ausgebildet hat. Entsprechend hat sich der Delaminationsflansch der äußeren Schicht 17b in seiner radialen Erstreckung vergrößert. Ein Hinterschnitt-Bereich 17e der äußeren Rohrwand 9 des Absorberkörpers 2 kann als Verankerungsabschnitt zur Verbindung des Absorberkörpers 2 mit einer Tragstruktur-Komponente mit Hilfe des nachfolgend noch beschriebenen Spritz- oder Klebeverfahrens dienen. Der Hinterschnitt-Bereich 17e kann auch zur Verankerung im Zusammenhang mit einem anderen Verbindungsverfahren, beispielsweise einem Verschweißen oder einem Vergießen genutzt werden.

Bei der Herstellung der Tragstruktur 1 wird zunächst der Absorberkörper 2 im Ursprungszustand, wie in der Figur 2 gezeigt, hergestellt. Der Absorberkörper 2 im Ursprungszustand kann als Endlos-Profilkörper in einem kontinuierlichen Verfahren hergestellt sein. Während dieses Herstellens des Absorberkörpers 2 im Ursprungszustand oder im Anschluss hieran erhält der Absorberkörper 2 die Triggerstruktur 8 durch stirnseitiges Anfasen. Anschließend wird der Absorberkörper 2 vordeformiert, wie in der Abfolge der Figuren 4 und 6 dargestellt. Die Vordeformation findet längs eines Deformations- bzw. Delaminationsweges x₁ statt, der nachfolgend im Zusammenhang mit der Figur 7 noch näher erläutert wird. Die Vordeformation des Absorberkörpers 2 kann beim Schließen eines Spritzgusswerkzeuges erfolgen, wie vorstehend bereits erläutert. Figur 6 zeigt dabei die Situation während des Schließen des Spritzguss-Werkzeuges und Figur 7 die Situation nach dem Schließen der Werkzeughälften 12, 13 des Spritzguss-Werkzeuges. Schließlich wird der Absorberkörper 2 einerseits mit der Tragstruktur-Widerlagerkomponente 3 und andererseits mit der Tragstruktur-Stoßaufnahmekomponente 4 verbunden. Hierzu wird ein nicht vordeformierter Abschnitt des Absorberkörpers 2 mit der Tragstruktur-Stoßaufnahmekomponente 4 über eine Schmelze-Verbindung, insbesondere durch ein Umspritzen, über eine Klebe-Verbindung oder über einen Formschluss kraftschlüssig verbunden.

Das Verbinden insbesondere eines vordeformierten Abschnitts des Absorberkörpers 2 mit diesen Tragstruktur-Komponenten 3, 4 kann durch Umspritzen im Spritzwerkzeug mit den Werkzeughälften 12, 13 erfolgen. Hierzu kann vor dem Umspritzen des Absorberkörpers 2 mit einem Stoß-Deformationsabschnitt 18 der Tragstruktur-Widerlagerkomponente 3 der Deformationskörper 15 des Spritzwerkzeuges axial wieder zurückgezogen werden, so dass der Absorberkörper 2 im Bereich der Deformationsflansches 11 zum Umspritzen freiliegt und vollständig mit dem Material des Stoß-Deformationsabschnitts 18 umspritzt werden kann. Alternativ ist es möglich, dass der Stoß-Deformationsabschnitt 18 selbst den Deformationskörper 15 als Teil des Spritzwerkzeuges in Form eines Spritz-Einlegers darstellt. Alternativ zu einem Umspritzen kann auch eine Klebeverbindung des deformierten Abschnitts des Absorberkörpers 2 mit der zugehörigen Tragstruktur-Komponente erfolgen.

Alternativ zu einem Umspritzen kann auch ein Verschweißen des Absorberkörpers 2 mit den Tragstruktur-Komponenten oder auch ein Verkleben oder ein Vergießen erfolgen.

Um zu vermeiden, dass Verbindungsmaterial, wie zum Beispiel Kunststoff-Schmelze oder Kleber, in einen für eine Fortsetzung der Deformation des Absorberkörpers 2 entscheidenden Abschnitt des Deformationsflunsches 11 eindringt, kann insbesondere ein Deformations- oder Delaminations-Rissbereich durch einen Abdeckkörper geschützt werden. Ein solcher Abdeckkörper kann beispielsweise durch einen Abdeckring 17d gebildet sein, der im Bereich des Deformationsflansches 11 so auf den Absorberkörper 2 aufgebracht wird, dass insbesondere ein Deformations- bzw. Delaminations-Riss abgedeckt ist. Ein solcher Abdeckring 17d ist in der Figur 7 mit dreieckigem Querschnitt angedeutet. Der Abdeckkörper kann aus Metall, kann aus Kunststoff oder kann aus einem Elastomer gefertigt sein.

Ein solcher Abdeckkörper kann gleichzeitig während der Herstellung des Absorberkörpers 2 im Ursprungszustand einen Begrenzungskörper zur Formung der Triggerstruktur 8 bilden. Der Abdeckörper kann in diesem Fall als Ring mit einem Querschnittsprofil ausgebildet sein, welches komplementär zur Triggerstruktur 8 ausgeführt ist. Ein derartiger Abdeckring kann auch, ohne dass eine Triggerstruktur am Absorberkörper 2 ausgebildet ist, zur Vorgabe definierter Vordeformations-Verhältnisse eingesetzt werden. In diesem Fall dient der Abdeckkörper bzw. Abdeckring gleichzeitig als Vordeformationskörper bzw. Vordelaminierungskörper, der beim Schließen des Spritzwerkzeuges zum Beispiel mit einer Profilschneide in einer diesem zugewandten Stirnseite des Absorberkörpers 2 eindringt und zu einer Vordeformation des Absorberkörpers 2 führt. Neben der Vordeformation hat ein solcher Abdeckkörper dann weiterhin die Funktion des Abdeckens eines Deformations- bzw. Delaminierungs-Risses, wie vorstehend schon ausgeführt.

Der Stoß-Deformationsabschnitt 18 kann gleichzeitig den Delaminierungskörper der Tragstruktur darstellen.

Der Stoß-Deformationsabschnitt 18 ist über einen zusätzlichen Verbindungsabschnitt 19 mit der Tragstruktur-Stoßaufnahmekomponente 4 verbunden.

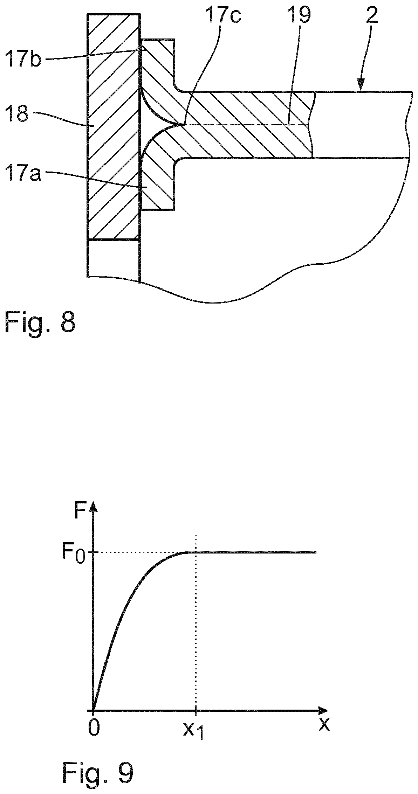

Figur 8 zeigt eine weitere Variante eines vordeformierten Absorberkörpers 2. Komponenten, die denjenigen entsprechen, die vorstehend unter Bezugnahme auf die Figuren 1 bis 7 bereits erläutert wurden, tragen die gleichen Bezugsnummern und werden nicht noch einmal im Einzelnen diskutiert. Der Absorberkörper 2 nach Figur 8 ist so vordeformiert, dass sowohl die innere Schicht 17a als auch die äußere Schicht 17b, ausgehend von der Deformaitons-Rissfront 17c unter Bildung eines inneren und eines äußeren Deformationsflansches senkrecht zur Axialrichtung des Absorberkörpers 2 umgebogen anliegen.

Ein vordeformierter Ausgangszustand des Absorberkörpers nach Figur 8 kann durch Verwendung einer Triggerstruktur nach Art der Triggerstruktur 8 des Absorberkörpers nach Figur 2 hervorgerufen werden. Dies geschieht einfach, in dem der Absorberkörper 2 mit der Triggerstruktur 8 gegen ein ebenes Widerlager, beispielsweise gegen den Stoß-Deformationsabschnitt 18, zur Vordeformation gedrückt wird.

Der nichtvordeformierte Abschnitt des Absorberkörpers 2 verbleibt ungeschädigt. Die Vordeformation und damit einhergehende Vorschädigung beschränkt sich auf den kurzen Vordeformationsweg. Der vordeformierte Absorberkörper 2 ist somit weiterhin in der Lage, alle Zug- und Querkräfte der normalen Betriebsnutzung der Tragstruktur 1 zu tragen.

Die Wirkung der Vordeformation erläutert das Kraft-Weg-Diagramm nach Figur 9. Gezeigt ist die Abhängigkeit einer Deformationskraft F von einem Relativ-Verlagerungsweg x in axialer Richtung zwischen dem Absorberkörper 2 und dem Deformationskörper 15 bzw. dem Stoß-Deformationsabschnitt 18.

Bei x = 0 liegt der Ursprungszustand des Absorberkörpers 2 vor. Bei x = x₁ liegt der Ausgangszustand des Absorberkörpers 2 vor. Bei x > x₁ liegt der Deformationszustand des Absorberkörpers 2 vor.

Bis zur Relativ-Verlagerung x₁ findet die Vordeformation durch den Deformationskörper 15 statt. Die Deformationskraft F erreicht dabei ein Kraftniveau F₀. Die Wegstrecke zwischen x = 0 und x = x₁ kann 2 mm bis 12 mm und insbesondere 5 mm bis 6 mm betragen.

Wird, ausgehend vom Ausgangszustand, der Absorberkörper 2 unter der Stoßwirkung des Stoß-Deformationsabschnitts 18 weiter deformiert, also weiter delaminiert, geschieht dies im Wegbereich x > x₁ mit nahezu konstanter Deformationskraft F₀. Diese weitere Deformation, ausgehend vom Ausgangszustand des Absorberkörpers 2, findet längs eines Risses 19 statt, der in den Figuren 6 bis 8 gestrichelt dargestellt ist. Eine radiale Position des Risses 19 zwischen der inneren Schicht 17a und der äußeren Schicht 17b bleibt während der Deformation nahezu konstant, da die Fasern des faserverstärkten Kunststoffmaterials des Absorberkörpers 2 eine entsprechende radiale Stabilisierungswirkung haben.

Zu beachten ist, dass nach erfolgter Ausbildung der Rissfront 17c eine weitere Delamination des Absorberkörpers 2 erfolgt, ohne dass ein Delaminierungskörper direkt in Kontakt mit der Rissfront 17c selbst kommt. Dies führt dazu, dass nach erfolgter Vordeformation im Wegbereich x > x₁ bei erneuter Stoßbelastung die Kraftkennlinie F(x) ohne Anlaufeffekte beim selben Kraftniveau F₀ weiterläuft.

Die Deformationskraft F₀, die im letzten Abschnitt des Deformationsweges, also bei x ≤ x₁ vom Deformationskörper 15 auf den Absorberkörper 2 ausgeübt wird, wird mit Hilfe eines Kraftaufnehmers der Werkzeughälfte 12 gemessen. Dieses Kraftniveau F₀ ist entsprechend das Deformationskraftniveau, welches der stoßinduzierten Energieabsorption entspricht, die bei der Verformung des Absorberkörpers 2 vom Ausgangszustand in den Deformationszustand über den Deformationsweg x aufgenommen wird. Über ein Vermessen der Kraft F₀ bei der Vordeformation ist also eine Qualitätssicherung für den Absorberkörper 2 gegeben.

## Patentansprüche

1. Energie absorbierende Tragstruktur (1) mit einem Absorberkörper (2) im Ausgangszustand aus einem faserverstärkten Kunststoffmaterial, der angeordnet ist zwischen einer Tragstruktur-Widerlagerkomponente (3) und einer Tragstruktur-Stoßaufnahmekomponente (4),
wobei der Absorberkörper (2) so ausgeführt ist, dass er aufgrund einer stoßerzeugten Relativverlagerung der Tragstruktur-Komponenten (3, 4) durch Verformung aus einem Ausgangszustand in einen verformten Deformationszustand Energie absorbiert, die durch einen Stoß in die Tragstruktur (1) eingeleitet wird,
**dadurch gekennzeichnet, dass** der Absorberkörper (2) bereits im Ausgangszustand als gegenüber einem Ursprungszustand durch Energieabsorption vordeformierter Körper ausgeführt ist,
wobei der Absorberkörper (2) als durch Delamination deformierter Körper ausgeführt ist.

2. Tragstruktur nach Anspruch 1, **dadurch gekennzeichnet, dass** diese eine Mehrzahl von Absorberkörpern (2, 5, 6) aus einem faserverstärkten Kunststoffmaterial aufweist, die jeweils angeordnet sind zwischen einer Tragstruktur-Widerlagerkomponente (3) und einer Tragstruktur-Stoßaufnahmekomponente (4).

3. Tragstruktur nach einem Anspruch 1 oder 2, **dadurch gekennzeichnet, dass** der Absorberkörper (2) durch eine Spritzguss-Verbindung mit mindestens einer der Tragstruktur-Komponenten (3, 4) verbunden ist.

4. Verfahren zur Herstellung einer Tragstruktur (1) nach einem der Ansprüche 1 bis 3 mit folgenden Schritten:
- Herstellen des Absorberkörpers (2) im Ursprungszustand,
- Vordeformieren des Absorberkörpers (2) in den Ausgangszustand,
- Verbinden des Absorberkörpers (2) mit der Tragstruktur-Widerlagerkomponente (3) und der Tragstruktur-Stoßaufnahmekomponente (4).

5. Verfahren nach Anspruch 4, **dadurch gekennzeichnet, dass** das Verbinden des Absorberkörpers (2) mit mindestens einer der Tragstruktur-Komponenten (3, 4) durch Spritzgießen erfolgt.

6. Verfahren nach Anspruch 5, **dadurch gekennzeichnet, dass** das Vordeformieren des Absorberkörpers (2) mit Hilfe eines Spritzwerkzeuges erfolgt.

7. Verfahren nach einem der Ansprüche 4 bis 6, **dadurch gekennzeichnet, dass** eine Kraft (F0), die zum Vordeformieren des Absorberkörpers (2) nahe des Ausgangszustandes benötigt wird, gemessen wird.

## Claims

1. Energy-absorbing support structure (1) with an absorbing body (2) in the starting state consisting of a fiber-reinforced plastics material, which is arranged between a support structure abutment component (3) and a support structure impact-absorbing component (4),
wherein the absorbing body (2) is configured in such a way that it absorbs energy by deforming from a starting state into a deformed deformation state on the basis of an impact-induced relative displacement of the support structure components (3, 4), said energy being introduced into the support structure (1) by an impact,
**characterized in that** the absorbing body (2) is already, in the starting state, designed as a body which has been predeformed by energy absorption compared to an original state, wherein the absorbing body (2) is configured as a body deformed by delamination.

2. Support structure according to claim 1, **characterized in that** the latter has a plurality of absorbing bodies (2, 5, 6) consisting of a fiber-reinforced plastics material, which are in each case arranged between a support structure abutment component (3) and a support structure impact-absorbing component (4).

3. Support structure according to either of claims 1 and 2, **characterized in that** the absorbing body (2) is connected to at least one of the support structure components (3, 4) by an injection molding connection.

4. Method for producing a support structure (1) according to any one of claims 1 to 3, the method having the following steps:
- producing the absorbing body (2) in the original state,
- predeforming the absorbing body (2) into the starting state,
- connecting the absorbing body (2) to the support structure abutment component (3) and the support structure impact-absorbing component (4).

5. Method according to claim 4, **characterized in that** the absorbing body (2) is connected to at least one of the support structure components (3, 4) by injection molding.

6. Method according to claim 5, **characterized in that** the predeformation of the absorbing body (2) takes place with the aid of an injection molding tool.

7. Method according to any one of claims 4 to 6, **characterized in that** a force (F₀), which is required to predeform the absorbing body (2) close to the starting state, is measured.

## Revendications

1. Structure porteuse absorbant l'énergie (1), avec un corps d'absorption (2) à l'état de départ, lequel est constitué d'une matière plastique renforcée de fibres et lequel est disposé entre un composant de butée (3) de la structure porteuse et un composant de réception des chocs (4) de la structure porteuse ;
selon laquelle le corps d'absorption (2) est réalisé de telle sorte que, sous l'effet d'un déplacement relatif, produit par un choc, des composants (3, 4) de la structure porteuse, ledit corps d'absorption (2) absorbe l'énergie induite par un choc de la structure porteuse (1), par une déformation en passant d'un état de départ à un état déformé par ladite déformation ;
**caractérisée en ce que** le corps d'absorption (2) est déjà réalisé à l'état de départ sous la forme d'un corps préalablement déformé par l'absorption de l'énergie, par rapport à un état initial ;
selon laquelle le corps d'absorption (2) est réalisé sous la forme d'un corps déformé par délamination.

2. Structure porteuse selon la revendication 1, **caractérisée en ce que** cette structure porteuse (1) présente une pluralité de corps d'absorption (2, 5, 6), lesquels sont constitués d'une matière plastique renforcée de fibres et lesquels sont disposés respectivement entre un composant de butée de la structure porteuse (3) et un composant de réception des chocs (4) de la structure porteuse.

3. Structure porteuse selon l'une des revendications 1 et 2, **caractérisée en ce que** le corps d'absorption (2) est raccordé à au moins l'un des composants (3, 4) de la structure porteuse par l'intermédiaire d'une jonction réalisée par l'intermédiaire d'un procédé de moulage par injection.

4. Procédé destiné à la fabrication d'une structure porteuse (1) selon l'une des revendications 1 à 3, lequel présente les phases suivantes :
- fabrication du corps d'absorption (2) à l'état initial ;
- déformation préliminaire du corps d'absorption (2) à l'état de départ ;
- jonction du corps d'absorption (2) avec le composant de butée (3) de la structure porteuse et avec le composant de réception des chocs (4) de la structure porteuse.

5. Procédé selon la revendication 4, **caractérisé en ce que** la jonction du corps d'absorption (2) est réalisée avec au moins l'un des composants (3, 4) de la structure porteuse par l'intermédiaire d'un procédé de moulage par injection.

6. Procédé selon la revendication 5, **caractérisé en ce que** la déformation préliminaire du corps d'absorption (2) est réalisée à l'aide d'un outil de moulage par injection.

7. Procédé selon l'une des revendications 4 à 6, **caractérisé en ce qu'**une force (F0), laquelle est nécessaire à la déformation préliminaire du corps d'absorption (2), proche de l'état de départ, est mesurée.
